# EUROPEAN PATENT SPECIFICATION

(11) **EP 4 558 870 B1**
(45) Date of publication and mention of the grant of the patent: **17.06.2026**
(21) Application number: 23757308.4
(22) Date of filing: 23.08.2023
(51) Int. Cl.: G05B 19/05

(54) **METHOD AND SYSTEM FOR MANAGING TECHNICAL INSTALLATION DURING OCCURRENCE OF ERROR STATE IN A CONTROLLER**
VERFAHREN UND SYSTEM ZUR VERWALTUNG EINER TECHNISCHEN ANLAGE BEIM AUFTRETEN EINES FEHLERZUSTANDS IN EINEM STEUERGERÄT
PROCÉDÉ ET SYSTÈME DE GESTION D'INSTALLATION TECHNIQUE LORS DE L'APPARITION D'UN ÉTAT D'ERREUR DANS UN CONTRÔLEUR

(30) Priority: 23.08.2022 EP 22191723
(43) Date of publication of application: 28.05.2025
(73) Proprietor: Siemens Aktiengesellschaft, 80333 München (DE)
(72) Inventor: ORUGANTI, Srivathsa Simha, Bangalore, Karnataka 560100 (IN)
(74) Representative: Isarpatent
(86) International application number: PCT/EP2023/073145
(87) International publication number: WO 2024/042126

(56) References cited:
- US-A1- 2017 082 998
- US-A1- 2020 050 167
- US-A1- 2020 142 731

## Description

The present invention relates to a field of industrial automation, and more particularly relates to a method and system for managing a technical installation during occurrence of an error state in a controller device of the technical installation. A technical installation such as an industrial plant comprises a plurality of field devices which are controlled by a plurality of controller devices such as programmable logic controllers, edge devices, and edge controllers. Examples of the plurality of field devices includes but is not limited to, control valves, motors, pumps, and actuators. Each of the plurality of controller devices is configured to control one or more field devices of the plurality of field devices. If a controller device of the plurality of controller devices enter an error state, a functioning of the controller device is hampered. Thus, functioning of the one or more field devices controlled by the controller device is also hampered, thus resulting in a downtime in the industrial plant.

In light of the above, there exists a need for an efficient and cost-effective method and system for managing a technical installation during occurrence of an error state in a controller device of the technical installation. Therefore, it is an object of the present invention to provide a method and system for managing a technical installation during occurrence of an error state in a controller device of the technical installation. The document US 2020/142731 A1 discloses a method to transfer a task from a failing device to another device within a network.

The object of the invention is achieved by a method and system for managing a technical installation during occurrence of an error state in a controller device of the technical installation. The invention is defined by the subject-matter of the independent claims.

The technical installation comprises one or more field devices, which are controlled by a first controller device (108A) of a plurality of controller devices (108A-N), and a plurality of controller devices. Examples of the plurality of controller devices comprises an edge device, a programmable logic controller device, a microprocessor or a processing unit. Each of the plurality of controller device is configured to execute an engineering program to control a plurality of field devices in the technical installation. In one example, the plurality of controller devices comprise one or more edge controllers. Examples of the plurality of field devices include, but is not limited to field devices such as control valves, motors, pumps, robots, lathes, sensors, and actuators. The plurality of field devices further comprises a pressure sensor, a temperature sensor and a vibration sensor. Further examples of the plurality of field devices comprises human machine interfaces such as keyboards, mouses, and touchscreens and a plurality of client devices such as a smartphone, a desktop computer, and a tablet computer which are network-connected to the plurality of controller devices. Examples of the technical installation includes a manufacturing plant, a power plant, or a chemical processing plant.

According to the invention, the method comprises receiving, by a processing unit, a plurality of program execution parameters from each of the plurality of controller devices in the technical installation. The plurality of program execution parameters, received from a controller device, comprises information about runtime execution of an engineering program in the corresponding controller device. For example, the plurality of program execution parameters comprises runtime information such as information about memory fragmentation, scan cycle nature, system resource utilization, and memory utilization of the controller device during the execution of the engineering program in the controller device. The engineering program comprises a plurality of programming blocks, each of which comprises one or more programming instructions. In one example, the engineering program is a graphical program comprising a program logic. The engineering program comprises a set of programmable instructions or statements corresponding to the program logic. Each programming block of the plurality of programming blocks corresponds to a function block under an engineering design of the technical installation.

According to the invention, the method comprises determining, by the processing unit, an error state in a first controller device of the plurality of controller devices. The error state is determined based on an analysis of the received plurality of program execution parameters. The first controller device is determined to be in the error state in a case where the first controller device has halted the execution of the engineering program. In one example, the processing unit is configured to compare one or more program execution parameters of the received plurality of program execution parameters with one or more thresholds stored in a memory. The one or more program execution parameters are received from the first controller device during execution of the engineering program in the first programable logic controller. In a case where the one or more program execution parameters crosses the one or more thresholds, then the first controller device is determined to be in the error state. In another example, the processing unit is configured to apply a pattern recognition machine learning model on the one or more program execution parameters to determine the error state in the first controller device. To train the pattern recognition machine learning model, historical data comprising a set of program execution parameters received from the plurality of controller devices during a specific time interval is analyzed by the processing unit. The processing unit is further configured to identify a plurality of patterns in the set of program execution parameters based on the analysis. Furthermore, the processing unit is further configured to identify a plurality of relationships between the set of program execution parameters and an error state of one or more of the plurality of controller devices. Thus, the pattern recognition machine learning model is configured to recognize the plurality of patterns in the plurality of program execution parameters and determine that the first controller device is in the error state. Examples of the pattern recognition machine learning model includes but is not limited to a supervised learning model, and an unsupervised learning model.

According to the invention, the method comprises determining from a plurality of fail-safe logic, by the processing unit, a fail-safe logic associated with the first controller device based on the determination of the error state in the first controller device. In one example, each fail-safe logic of the plurality of fail-safe logics has an identification number which denotes a controller device which is associated with the fail-safe logic. Thus, the processing unit is configured to determine the fail-safe logic based on an identification number of the fail-safe logic which matches with an identification number of the first controller device. In one example, the plurality of fail-safe logic comprises a plurality of programming instructions which are configured to manage the plurality of field devices in the technical installation. Each fail-safe logic of the plurality of fail-safe logics is associated with a specific controller device of the plurality of controller devices. The fail-safe logic associated with the first controller device comprises a set of programming instructions which are configured to manage one or more field devices which are controlled by the first programming logic controller. The fail-safe logic may be executed any of the plurality of controller device to manage the one or more field devices.

According to the invention, the method further comprises determining, by the processing unit, that the second controller device is not in an error state based on the analysis of the received program execution parameters. For example, in a case where one or more program execution parameters of the second controller device does not cross the one or more thresholds, then the second controller device is determined to be not in the error state. In another example, the second controller device is determined to be not in the error state by the pattern recognition machine learning model.

According to the invention, the method further comprises transmitting, by the processing unit, the fail-safe logic to the second controller device based on the determination that the second controller device is not in the error state. The processing unit is configured to transmit the determined fail-safe logic to the second controller device via a network.

In the preferred embodiment, the method comprises establishing, by the processing unit, a connection path between the second controller device and the one or more field devices associated with the first controller device. In one example, the processing unit is configured to establish the connection path via the network.

According to the invention, the method comprises initiating, by the processing unit, an execution of the fail-safe logic associated with the first controller device, in a second controller device of the plurality of controller devices. For example, the processing unit is configured to transmit a request to the second controller device via the network. The request is to initiate the execution of the fail-safe logic in the second programmable controller. The second programmable controller thus executes the fail-safe logic to control the one or more field devices associated with the first controller device.

Advantageously, the one or more field devices are controlled and managed even when the first controller device is in the error state. Thus, the processing unit 202 seamlessly transfer control of the one or more field devices from the first controller device to the second controller device, thus avoiding downtime in the technical installation.

In the preferred embodiment, the method comprises halting, by the processing unit, a runtime of the first controller device based on the determination of the error state of the first controller device. In one example, the processing unit is configured to transmit a halt command to the first controller device to halt the runtime of the first controller device. In one example, when the first controller device is halted, the first controller device terminates the execution of the engineering program. Advantageously, the first controller device halts transmitting erroneous output to the one or more field devices.

In the preferred embodiment, the method comprises halting, by the processing unit, the one or more field devices based on the determination of the error state in the first controller device. In one example, when the one or more field devices are halted, a functioning of the one or more field devices is stopped. Furthermore, the processing unit is further configured to notify the user that the first controller device is in error state. Furthermore, the user is enabled to resolve the error state of the first controller device by debugging the engineering program.

In the preferred embodiment, the method comprises determining, by the processing unit, that the error state of the first controller device is resolved based on an analysis of the received plurality of program execution parameters. To determine that the error state is resolved, the processing unit is configured to determine that the received plurality of program execution parameters is within the plurality of thresholds. Advantageously, the first controller device resumes the execution of the engineering program once one or more errors in the engineering program are resolved.

In the preferred embodiment, the method further comprises resuming, by the processing unit, the runtime of the first controller device based on the determination that the error state of the first controller device is resolved. In a case where is it is determined that the error state is resolved, the processing unit is configured to transmit a trigger to the first controller device to resume the runtime execution of the engineering program.

In the preferred embodiment, the method further comprises determining, by the processing unit, a count of times in which the error state is determined in the first controller device during a time interval. In the preferred embodiment, the method further comprises notifying, by the processing unit, a user about the determined count of times. Advantageously, the user is enabled to evaluate a performance of the first controller device.

In one example, the plurality of program execution parameters comprises information about a programming block, of the engineering program, which is executed by the first controller device at a specific time interval. In the preferred embodiment, the method further comprises determining, by the processing unit, the programming block of an engineering program which is executed by the first controller device at the specific time interval based on the analysis of the plurality of program execution parameters.

In the preferred embodiment, the method further comprises determining, by the processing unit, whether the error state occurred, in the first controller device, during an execution of the determined programming block. In the preferred embodiment, the method further comprises notifying, by the processing unit, the user that the error state, occurred in the first controller device, during the execution of the determined programming block by the first controller device.

In the preferred embodiment, the method further comprises executing, by the processing unit, a handling logic to control the one or more field devices in an event when the error state is determined in the first programable logic controller. The handling logic comprises a set of programming instructions which are configured to manage one or more field devices which are controlled by the first programming logic controller. The handling logic is executable by the processing unit.

The object of the present invention is also achieved by an industrial control system for managing a technical installation during occurrence of an error state in a controller device. The industrial control system comprises a processing unit and a memory coupled to the processing unit. The memory comprises a Plant safety administrator module stored in the form of machine-readable instructions executable by the processor unit. The Plant safety administrator module is configured to be capable of causing the processing unit to perform the method as described above.

The object of the present invention is also achieved by an industrial environment. The industrial environment comprising an industrial control system, a technical installation comprising one or more physical components and a plurality of human machine interfaces communicatively coupled to the industrial control system and the technical installation. The industrial control system comprises a processing unit and a memory, which the memory comprises a Plant safety administrator module configured to be capable of causing the processing unit to perform the above-described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of managing a technical installation during occurrence of an error state in a controller device of the technical installation, according to an embodiment of the present invention;
- FIG 2: is a block diagram of an industrial control system, such as those shown in FIG. 1, in which an embodiment of the present invention can be implemented;
- FIG 3: is a block diagram of a Plant safety administrator module, such as those shown in FIG 2, in which an embodiment of the present invention can be implemented;
- FIGS 4A-D: is a process flowchart illustrating an exemplary method of managing a technical installation during occurrence of an error state in a controller device of the technical installation, according to an embodiment of the present invention;

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

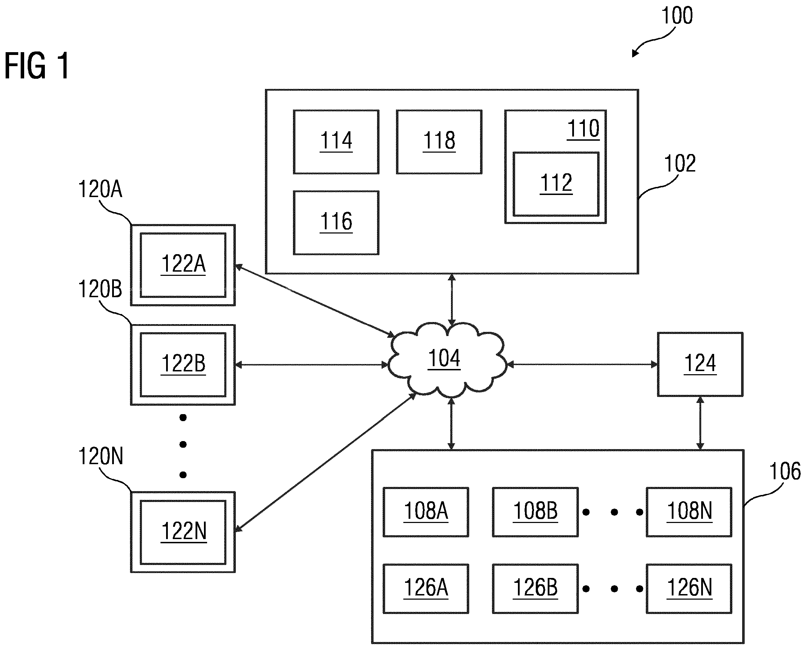

FIG 1 is a block diagram of an industrial environment 100 capable of managing a technical installation 106 during occurrence of an error state in a controller device of the technical installation 106, according to an embodiment of the present invention. In FIG 1, the industrial environment 100 includes an industrial control system 102, a technical installation 106 and plurality of human machine interfaces 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to the technical installation 106 via a network connection 104 (such as Local Area Network (LAN), Wide Area Network (WAN), Wi-Fi, Internet, any short range or wide range communication). The industrial control system 102 is also connected to the plurality of human machine interfaces 120A-N via the network connection 104.

The industrial control system 102 is connected to a plurality of field devices 126A-N in the technical installation 106 via the network connection 104. The plurality of field devices 126A-N may include servers, robots, switches, automation devices, programmable logic controllers (PLC)s, human machine interfaces (HMIs), motors, valves, pumps, actuators, sensors and other industrial equipment(s). The plurality of field devices 126A-N may be connected to each other or several other components (not shown in FIG 1) via physical connections. The physical connections may be through wiring between the plurality of field devices 126A-N. Alternatively, the plurality of field devices 126A-N may also be connected via non-physical connections (such as Internet of Things (IOT)) and 5G networks. Although FIG 1 illustrates the industrial control system 102 connected to one technical installation 106, one skilled in the art can envision that the industrial control system 102 can be connected to several technical installations located at different geographical locations via the network connection 104. The plurality of field devices 126A-N further comprises sensors such as a pressure sensor, a voltage sensor, a temperature sensor, and a vibration sensor. In such a case, the plurality of field devices 126A-N takes one or more measurements from the technical installation 106. The one or more measurements comprises a temperature measurement, a pressure measurement, and a vibration measurement.

The technical installation 106 further comprises a plurality of controller devices 108A-N. Examples of the plurality of controller devices 108A-N comprises, but is not limited to controller devices such as controller devices, microprocessors, and other processing units. The plurality of controller devices 108A-N is configured to execute an engineering program stored in the industrial control system 102, in a plurality of scan cycles. The plurality of controller devices 108A-N is configured to receive a plurality of input parameter values from the plurality of field devices 126A-N. The plurality of controller devices 108A-N is further configured to transmit a plurality of output parameter values to the plurality of field devices 126A-N. Each of the plurality of field devices 126A-N are connected to one or more of the plurality of controller devices 108A-N via the network connection 104. Each of the plurality of controller devices 108A-N is configured to control one or more field devices of the plurality of field devices 126A-N. For example, a first controller device 108A is configured to control a first field device 126A and a second field device 126N of the plurality of field devices 126A-N.

The plurality of human machine interfaces 120A-N may be a desktop computer, laptop computer, tablet, smart phone and the like. Each of the plurality of human machine interfaces 120A-N is provided with an engineering tool 122A-N for generating and/or editing engineering programs respectively. The plurality of human machine interfaces 120A-N can access the industrial control system 102 for automatically generating engineering programs. The plurality of human machine interfaces 120A-N can access cloud applications (such as providing performance visualization of the plurality of field devices 126A-N via a web browser). Throughout the specification, the terms "human machine interface", "client device" and "user device" are used interchangeably. One or more of the plurality of human machine interfaces 120A-N are further configured to receive a plurality of user actions from a plurality of users. The plurality of user actions comprises user inputs, user commands, user gestures, programming instructions, and user passwords. The plurality of user actions are entered by the plurality of users to perform one or more tasks using the plurality of controller devices 108AN and the plurality of field devices 126A-N.

It is noted that the industrial control system 102 is connected to the controller device 124. Examples of the controller device 124 comprises, but is not limited to controller devices, microprocessors, and other processing units. The controller device 124 is configured to execute the engineering program generated by the industrial control system 102, in a plurality of scan cycles. The controller device 124 is configured to receive a plurality of input parameter values from the plurality of sensor devices 126A-N and the plurality of human machine interfaces 120A-N. The controller device 124 is further configured to transmit a plurality of output parameter values to the plurality of field devices 108A-N and the plurality of human machine interfaces.

The industrial control system 102 may be a standalone server deployed at a control station or may be a remote server on a cloud computing platform. In a preferred embodiment, the industrial control system 102 may be a cloud-based industrial control system. The industrial control system 102 is capable of delivering applications (such as cloud applications) for managing a technical installation 106 comprising plurality of field devices 108A-N. The industrial control system 102 may comprise a digitalization platform 110 (such as a cloud computing platform), a plant safety administrator module 112, a server 114 including hardware resources and an operating system (OS), a network interface 116 and a database 118. The network interface 116 enables communication between the industrial control system 102, the technical installation 106, the plurality of human machine interfaces 120A-N, the plurality of field devices 126AN, and the plurality of controller device 108A-N. The interface, for example, a cloud interface (not shown in FIG 1) may allow the engineers at the plurality of field devices 126A-N to access the plurality of controller device 108A-N and execute a plurality of user actions on the controller device 124 and the plant safety administrator module 112.

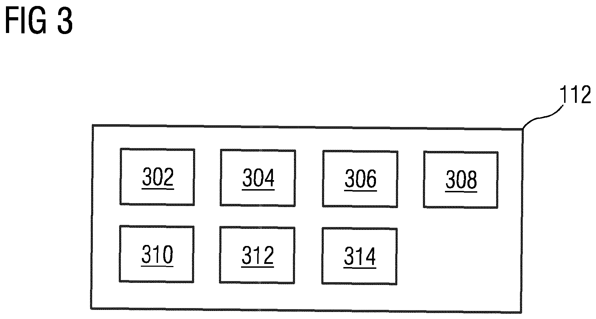

The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the servers 114 and delivers the aforementioned services using the application programming interfaces deployed therein. The digitalization platform 110 may comprise a combination of dedicated hardware and software built on top of the hardware and the OS. In an exemplary embodiment, the digitalization platform 110 may correspond to an Integrated Development Environment (IDE) comprising program editors and compilers which allow the users of the plurality of human machine interfaces 120A-N to generate engineering programs. The digitalization platform 110 may further comprise the plant safety administrator module 112 configured for enabling management of the technical installation 106 during occurrence of an error state of at least one controller device of the plurality of controller devices 108AN. Details of the plant safety administrator module 112 is explained in FIG. 3.

The database 118 stores the information relating to the technical installation 106, the plurality of controller devices 108A-N, the plurality of field devices 126A-N, the plurality of human machine interfaces 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the plant safety administrator module 112.

In one example, the plant safety administrator module 112 is implemented in a controller device 124 which is configured to manage the technical installation 106 during occurrence of an error state in the first controller device 108A. The controller device 124 is communicatively coupled to the plurality of controller devices 108A-N, the plurality of field devices 126AN, and the industrial control system 102. In one example, a user is enabled to write programing code in the controller device 124 using the plurality of human machine interfaces 120A-N.

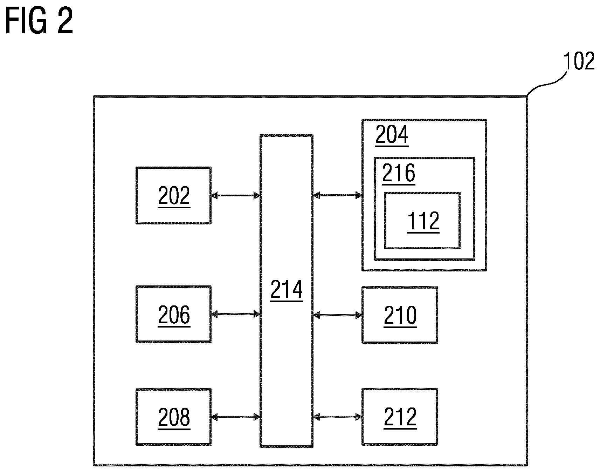

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the data acquisition and analytics module 112 stored in the form of machine-readable instructions on any of the above-mentioned storage media and may be in communication with and executed by the processor(s) 202.

When executed by the processing unit 202, the Plant safety administrator module 112 causes the processing unit 202 to receive a plurality of program execution parameters from each of the plurality of controller devices 108A-N in the technical installation. The plurality of program execution parameters, received from a controller device, comprises information about runtime execution of an engineering program in the controller device. For example, the plurality of program execution parameters comprises runtime information such as information about memory fragmentation, scan cycle nature, system resource utilization, and memory utilization of the controller device during the execution of the engineering program in the controller device. The engineering program comprises a plurality of programming blocks, each of which comprises one or more programming instructions. In one example, the engineering program is a graphical program comprising a program logic such as an engineering program. The engineering program comprises a set of programmable instructions or statements corresponding to the program logic. Each programming block of the plurality of programming blocks corresponds to a function block under an engineering design of the technical installation 106.

When executed by the processing unit 202, the Plant safety administrator module 112 further causes the processing unit 202 to determine an error state in the first controller device 108A of the plurality of controller devices 108A-N. The error state is determined based on an analysis of the received plurality of program execution parameters. The first controller device 108A is determined to be in the error state in a case where the first controller device 108A has halted the execution of the engineering program. In one example, the processing unit 202 is configured to compare one or more program execution parameters of the received plurality of program execution parameters with one or more thresholds stored in a memory such as the accessible memory 204. The one or more program execution parameters are received from the first controller device 108A during execution of the engineering program in the first programable logic controller 108A. In a case where the one or more program execution parameters crosses the one or more thresholds, then the first controller device 108A is determined to be in the error state. In another example, the processing unit 202 is configured to apply a pattern recognition machine learning model on the one or more program execution parameters to determine the error state in the first controller device 108A. To train the pattern recognition machine learning model, historical data comprising a set of program execution parameters received from the plurality of controller devices during a specific time interval is analyzed by the processing unit 202. The processing unit 202 is further configured to identify a plurality of patterns in the set of program execution parameters based on the analysis. Furthermore, the processing unit 202 is further configured to identify a plurality of relationships between the set of program execution parameters and an error state of one or more controller devices of the plurality of controller devices 108A-N. Thus, the pattern recognition machine learning model is configured to recognize the plurality of patterns in the plurality of program execution parameters and determine that the first controller device 108A is in the error state. Examples of the pattern recognition machine learning model includes but is not limited to a supervised learning model, and an unsupervised learning model.

When executed by the processing unit 202, the Plant safety administrator module 112 further causes the processing unit 202 to determine from a plurality of fail-safe logic a fail-safe logic associated with the first controller device based on the determination of the error state in the first controller device. In one example, each fail-safe logic of the plurality of fail-safe logics has an identification number which denotes a controller device which is associated with the fail-safe logic. Thus, the processing unit 202 is configured to determine the fail-safe logic based on an identification number of the fail-safe logic which matches with an identification number of the first controller device. In one example, the plurality of fail-safe logic comprises a plurality of programming instructions which are configured to manage the plurality of field devices 126A-N in the technical installation 106. Each fail-safe logic of the plurality of fail-safe logics is associated with a specific controller device of the plurality of controller devices 108A-N. The fail-safe logic associated with the first controller device 108A comprises a set of programming instructions which are configured to manage one or more field devices (126A and 126B) which are controlled by the first programming logic controller 108A. The fail-safe logic may be executed any of the plurality of controller devices 108A-N to manage the one or more field devices 126A and 126B.

When executed by the processing unit 202, the Plant safety administrator module 112 further causes the processing unit 202 to determine that a second controller device 108B of the plurality of controller device 108A-N is not in an error state based on the analysis of the received plurality of program execution parameters. For example, in a case where one or more program execution parameters of the second controller device 108B does not cross the one or more thresholds, then the second controller device 108B is determined to be not in the error state. In another example, the second controller device 108B is determined to be not in the error state by the pattern recognition machine learning model.

When executed by the processing unit 202, the Plant safety administrator module 112 further causes the processing unit 202 to transmit the fail-safe logic to the second controller device 108B based on the determination that the second controller device 108B is not in the error state. The processing unit 202 is configured to transmit the determined fail-safe logic to the second controller device 108B via the network 104.

When executed by the processing unit 202, the Plant safety administrator module 112 further causes the processing unit 202 to establish a connection path between the second controller device 108B and the one or more field devices (126A and 126B) associated with the first controller device 108A. In one example, the processing unit 202 is configured to establish the connection path via the network 104.

When executed by the processing unit 202, the Plant safety administrator module 112 further causes the processing unit 202 to initiate the execution of the fail-safe logic associated with the first controller device 108A, in the second controller device 108B of the plurality of controller devices 108A-N. For example, the processing unit 202 is configured to transmit a request to the second controller device 108B via the network 104. The request is to initiate the execution of the fail-safe logic in the second programmable controller 108B.

When executed by the processing unit 202, the Plant safety administrator module 112 further causes the processing unit 202 to halt an execution of the engineering program by the first controller device 108A based on the determination of the error state of the first controller device 108A. In one example, the processing unit is configured to transmit a halt command to the first controller device 108A to halt the runtime of the first controller device 108A. In one example, when the first controller device 108A is halted, the first controller device 108A terminates the execution of the engineering program.

When executed by the processing unit 202, the Plant safety administrator module 112 further causes the processing unit 202 to halt the one or more field devices (126A and 126B) based on the determination of the error state in the first controller device 108A. In one example, when the one or more field devices (126A and 126B) are halted, a functioning of the one or more field devices (126A and 126B) is stopped. Furthermore, the processing unit 202 is further configured to notify the user that the first controller device 108A is in the error state. Furthermore, the user is enabled to resolve the error state of the first controller device 108A by debugging the engineering program.

When executed by the processing unit 202, the Plant safety administrator module 112 further causes the processing unit 202 to determine that the error state of the first controller device is resolved based on an analysis of the received plurality of program execution parameters. To determine that the error state is resolved, the processing unit 202 is configured to determine that the received plurality of program execution parameters is within the plurality of thresholds.

When executed by the processing unit 202, the Plant safety administrator module 112 further causes the processing unit 202 to resume the runtime of the first controller device 108A based on the determination that the error state of the first controller device 108A is resolved. In a case where is it is determined that the error state is resolved, the processing unit 202 is configured to transmit a trigger to the first controller device 108A to resume the runtime execution of the engineering program.

When executed by the processing unit 202, the Plant safety administrator module 112 further causes the processing unit 202 to determine a count of times in which the error state is determined in the first controller device 108A during a time interval. When executed by the processing unit 202, the Plant safety administrator module 112 further causes the processing unit 202 to notify a user about the determined count of times via the plurality of human machine interfaces 120A-N.

In one example, the plurality of program execution parameters comprises information about a programming block, of the engineering program, which is executed by the first controller device 108A at a specific time interval. When executed by the processing unit 202, the Plant safety administrator module 112 further causes the processing unit 202 to determine a programming block of an engineering program which is executed by the first controller device 108A at the specific time interval based on the analysis of the plurality of program execution parameters.

When executed by the processing unit 202, the Plant safety administrator module 112 further causes the processing unit 202 to determine whether the error state occurred, in the first controller device 108A, during an execution of the determined programming block. When executed by the processing unit 202, the Plant safety administrator module 112 further causes the processing unit 202 to notify the user that the error state, occurred in the first controller device, during the execution of the determined programming block by the first controller device 108A.

When executed by the processing unit 202, the Plant safety administrator module 112 further causes the processing unit 202 to execute a handling logic to control the one or more field devices 126A-B in an event when the error state is determined in the first programable logic controller 108A. The handling logic comprises a set of programming instructions which are configured to manage one or more field devices which are controlled by the first programming logic controller. The handling logic is executable by the processing unit 202.

The communication interface 208 is configured for establishing communication sessions between the plurality of human machine interfaces 120A-N, the industrial control system 102, and the controller device 124. The communication interface 208 allows the one or more engineering applications running on the plurality of human machine interfaces 120A-N to import/export engineering programs into the controller device 124. In an embodiment, the communication interface 208 interacts with the interface at the plurality of human machine interfaces 120A-N for allowing the engineers to access the engineering programs associated with an engineering project file and perform one or more actions on the engineering programs stored in the industrial control system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the industrial control system 102, plurality of human machine interfaces 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

FIG 3 is a block diagram of the plant safety administrator module 112, such as those shown in FIG 2, in which an embodiment of the present invention can be implemented. In FIG 3, plant safety administrator module 112 comprises a request handler module 302, a controller device selector module 304, an analysis module 306, a modifier module 308, an engineering object database 310, a validation module 312 and a deployment module 314. FIG. 3 is explained in conjunction with FIG. 1 and FIG. 2.

The request handler module 302 is configured for receiving the request to manage the technical installation 106. For example, the request is received from one of the one or more users external to the industrial environment 100 via a network. In alternative embodiment, the request is received from the one or the plurality of human machine interfaces 120A-N via the network. The request handler module 302 is further configured to capture the plurality of program execution parameters transmitted by the plurality of controller device 108A-N.

The controller device selector module 304 is configured for determining the second controller device 108B to execute the fail-safe logic associated with the first controller device.

The analysis module 306 is configured for analyzing the plurality of program execution parameters to determine teh error state in the first controller devices.

The modifier module 308 is configured for modifying the fail-safe logic before transmitting the fail-safe logic to the second programmable logic control 108B.

The engineering object database 310 is configured for generating an engineering object library comprising the plurality of fail-safe logics, information about the plurality of field devices 126A-N, physical connections between the plurality of field devices 126A-N, and the plurality of controller devices 108A-N.

The validation module 312 is configured to validate the engineering program which is executed by the plurality of controller devices 108A-N. The validation module 312 is configured to simulate execution of the plurality of controller devices 108A-N

The deployment module 314 is configured for deploying the fail-safe logic associated with the first controller device 108A, to the second controller device 108B.

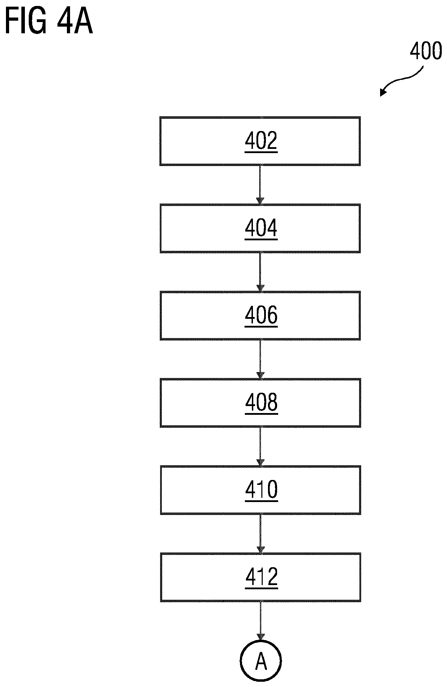

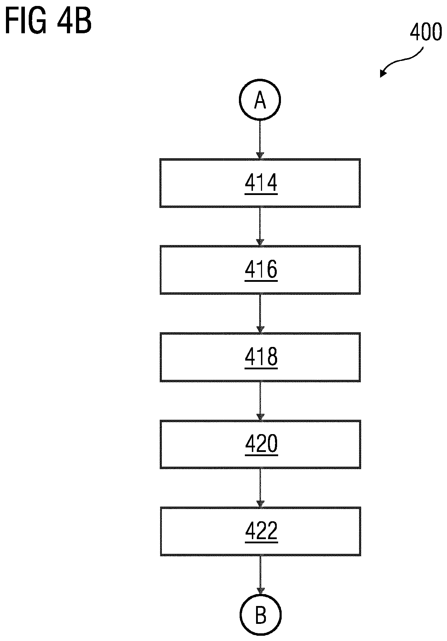

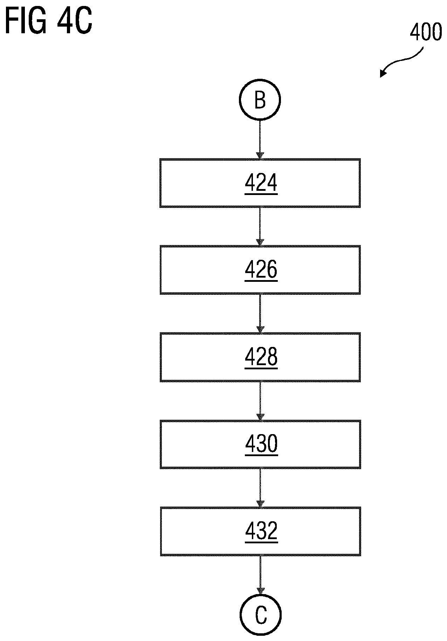

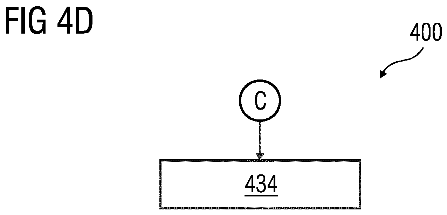

FIGS 4A-E show a process flowchart illustrating an exemplary method 400 of managing the technical installation during an error state of the controller device according to an embodiment of the present invention. FIG. 4A-E is explained in conjunction with FIGs 1 to 3.

At 402, the Plant safety administrator module 112 causes the processing unit 202 to receive a plurality of program execution parameters from each of the plurality of controller devices 108AN in the technical installation. The plurality of program execution parameters, received from a controller device, comprises information about runtime execution of an engineering program in the controller device. For example, the plurality of program execution parameters comprises runtime information such as information about memory fragmentation, scan cycle nature, system resource utilization, and memory utilization of the controller device during the execution of the engineering program in the controller device. The engineering program comprises a plurality of programming blocks, each of which comprises one or more programming instructions. In one example, the engineering program is a graphical program comprising a program logic. The engineering program comprises a set of programmable instructions or statements corresponding to the program logic. Each programming block of the plurality of programming blocks corresponds to a function block under an engineering design of the technical installation 106.

At 404 the Plant safety administrator module 112 further causes the processing unit 202 to determine an error state in the first controller device 108A of the plurality of controller devices 108A-N. The error state is determined based on an analysis of the received plurality of program execution parameters. The first controller device 108A is determined to be in the error state in a case where the first controller device 108A has halted the execution of the engineering program. In one example, the processing unit 202 is configured to compare one or more program execution parameters of the received plurality of program execution parameters with one or more thresholds stored in a memory such as the accessible memory 204. The one or more program execution parameters are received from the first controller device 108A during execution of the engineering program in the first programable logic controller 108A. In a case where the one or more program execution parameters crosses the one or more thresholds, then the first controller device 108A is determined to be in the error state. In another example, the processing unit 202 is configured to apply a pattern recognition machine learning model on the one or more program execution parameters to determine the error state in the first controller device 108A. To train the pattern recognition machine learning model, historical data comprising a set of program execution parameters received from the plurality of controller devices during a specific time interval is analyzed by the processing unit 202. The processing unit 202 is further configured to identify a plurality of patterns in the set of program execution parameters based on the analysis. Furthermore, the processing unit 202 is further configured to identify a plurality of relationships between the set of program execution parameters and an error state of one or more controller devices of the plurality of controller devices 108A-N. Thus, the pattern recognition machine learning model is configured to recognize the plurality of patterns in the plurality of program execution parameters and determine that the first controller device 108A is in the error state. Examples of the pattern recognition machine learning model includes but is not limited to a supervised learning model, and an unsupervised learning model.

At 406 the Plant safety administrator module 112 further causes the processing unit 202 to determine from a plurality of fail-safe logic a fail-safe logic associated with the first controller device based on the determination of the error state in the first controller device. In one example, each fail-safe logic of the plurality of fail-safe logics has an identification number which denotes a controller device which is associated with the fail-safe logic. Thus, the processing unit 202 is configured to determine the fail-safe logic based on an identification number of the fail-safe logic which matches with an identification number of the first controller device. In one example, the plurality of fail-safe logic comprises a plurality of programming instructions which are configured to manage the plurality of field devices 126A-N in the technical installation 106. Each fail-safe logic of the plurality of fail-safe logics is associated with a specific controller device of the plurality of controller devices 108A-N. The fail-safe logic associated with the first controller device 108A comprises a set of programming instructions which are configured to manage one or more field devices (126A and 126B) which are controlled by the first programming logic controller 108A. The fail-safe logic may be executed any of the plurality of controller devices 108A-N to manage the one or more field devices 126A and 126B.

At 408 the Plant safety administrator module 112 further causes the processing unit 202 to determine that the second controller device 108B is not in an error state based on the analysis of the received plurality of program execution parameters. For example, in a case where one or more program execution parameters of the second controller device 108B does not cross the one or more thresholds, then the second controller device 108B is determined to be not in the error state. In another example, the second controller device 108B is determined to be not in the error state by the pattern recognition machine learning model.

At 410 the Plant safety administrator module 112 further causes the processing unit 202 to transmit the fail-safe logic to the second controller device 108B based on the determination that the second controller device 108B is not in the error state. The processing unit 202 is configured to transmit the determined fail-safe logic to the second controller device 108B via the network 104.

At 412 the Plant safety administrator module 112 further causes the processing unit 202 to establish a connection path between the second controller device 108B and the one or more field devices (126A and 126B) associated with the first controller device 108A. In one example, the processing unit 202 is configured to establish the connection path via the network 104.

At 414 the Plant safety administrator module 112 further causes the processing unit 202 to initiate the execution of the fail-safe logic associated with the first controller device 108A, in the second controller device 108B of the plurality of controller devices 108A-N. For example, the processing unit 202 is configured to transmit a request to the second controller device 108B via the network 104. The request is to initiate the execution of the fail-safe logic in the second programmable controller 108B.

At 416 the Plant safety administrator module 112 further causes the processing unit 202 to halt a runtime of the first controller device 108A based on the determination of the error state of the first controller device 108A. In one example, the processing unit is configured to transmit a halt command to the first controller device 108A to halt the runtime of the first controller device 108A. In one example, when the first controller device 108A is halted, the first controller device 108A terminates the execution of the engineering program.

At 418 the Plant safety administrator module 112 further causes the processing unit 202 to halt the one or more field devices (126A and 126B) based on the determination of the error state in the first controller device 108A. In one example, when the one or more field devices (126A and 126B) are halted, a functioning of the one or more field devices (126A and 126B) is stopped. Furthermore, the processing unit 202 is further configured to notify the user that the first controller device 108A is in error state. Furthermore, the user is enabled to resolve the error state of the first controller device 108A by debugging the engineering program.

At 420 the Plant safety administrator module 112 further causes the processing unit 202 to determine that the error state of the first controller device is resolved based on an analysis of the received plurality of program execution parameters. To determine that the error state is resolved, the processing unit 202 is configured to determine that the received plurality of program execution parameters is within the plurality of thresholds.

At 422 the Plant safety administrator module 112 further causes the processing unit 202 to resume the runtime of the first controller device 108A based on the determination that the error state of the first controller device 108A is resolved. In a case where is it is determined that the error state is resolved, the processing unit 202 is configured to transmit a trigger to the first controller device 108A to resume the runtime execution of the engineering program.

At 424 the Plant safety administrator module 112 further causes the processing unit 202 to determine a count of times in which the error state is determined in the first controller device 108A during a time interval. At 426 the Plant safety administrator module 112 further causes the processing unit 202 to notify a user about the determined count of times via the plurality of human machine interfaces 120A-N.

In one example, the plurality of program execution parameters comprises information about a programming block, of the engineering program, which is executed by the first controller device 108A at a specific time interval. At 428 the Plant safety administrator module 112 further causes the processing unit 202 to determine a programming block of an engineering program which is executed by the first controller device 108A at the specific time interval based on the analysis of the plurality of program execution parameters.

At 430 the Plant safety administrator module 112 further causes the processing unit 202 to determine whether the error state occurred, in the first controller device 108A, during an execution of the determined programming block. At 432 the Plant safety administrator module 112 further causes the processing unit 202 to notify the user that the error state, occurred in the first controller device, during the execution of the determined programming block by the first controller device 108A.

At 434 the Plant safety administrator module 112 further causes the processing unit 202 to execute a handling logic to control the one or more field devices 126A-B in an event when the error state is determined in the first programable logic controller 108A. The handling logic comprises a set of programming instructions which are configured to manage one or more field devices which are controlled by the first programming logic controller. The handling logic is executable by the processing unit 202.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All advantageous embodiments claimed in method claims may also be apply to system/apparatus claims.

## Claims

1. A method of managing a technical installation (106) during occurrence of an error state in a controller device (108A) of the technical installation (106), the technical installation comprising one or more field devices (126A-B) which are controlled by a first controller device (108A) of a plurality of controller devices (108A-N), and the method comprising:
receiving, by a processing unit (202), a plurality of program execution parameters from each controller device of the plurality of controller devices (108A-N) in the technical installation (106), wherein the plurality of program execution parameters, associated with each controller device, comprises runtime information of a corresponding controller device during a runtime execution of an engineering program in the corresponding controller device;
determining, by the processing unit (202), an error state in the first controller device (108A) of the plurality of controller devices (108A-N), wherein the error state is determined based on an analysis of the received plurality of program execution parameters;
determining from a plurality of fail-safe logics, by the processing unit (202), a fail-safe logic associated with the first controller device (108A) based on the determination of the error state in the first controller device (108A); and
initiating, by the processing unit (202), an execution of the fail-safe logic associated with the first controller device (108A), in a second controller device (108B) of the plurality of controller devices (108-N), wherein the initiation of the execution of the fail-safe logic comprises:
determining, by the processing unit (202), that the second controller device (108B) is not in an error state based on the analysis of the received program execution parameters;
transmitting, by the processing unit (202), the fail-safe logic to the second controller device (108B) based on the determination that the second controller device is not in the error state; and
establishing, by the processing unit (202), a connection between the second controller device (108B) and the one or more field devices (126A-B) associated with the first controller device (108A).

2. The method according to claims 1, further comprising halting, by the processing unit (202), an execution of an engineering program in the first controller device (108A) based on the determination of the error state of the first controller device (108A).

3. The method according to claims 2, further comprising halting, by the processing unit (202), an execution of the first controller device (108A) based on the determination of the error state of the first controller device (108A).

4. The method according to claims 3, further comprising:
halting, by the processing unit (202), the one or more field devices (126A-B) based on the determination of the error state in the first controller device (108A);
determining, by the processing unit (202), that the error state of the first controller device (108A) is resolved, wherein a resolution of the error state is determined based on an analysis of the received plurality of program execution parameters; and
resuming, by the processing unit (202), the runtime of the first controller device (108A) based on the determination that the error state of the first controller device (108A) is resolved.

5. The method according to claims 1 to 4, further comprising:
determining, by the processing unit (202), a count of times in which the error state is determined in the first controller device (108A) during a time interval; and
notifying, by the processing unit (202), a user about the determined count of times.

6. The method according to claims 1 to 5, further comprising:
determining, by the processing unit (202), a programming block of an engineering program which is executed by the first controller device (108A) based on the analysis of the program execution parameters;
determining, by the processing unit (202), whether the error state is determined in the first controller device (108A) during an execution of the determined programming block; and
notifying, by the processing unit (202), a user that the error state is determined in the first controller device (108A) during the execution of the determined programming block by the first controller device (108A).

7. The method according to claims 1 to 6, further comprising:
executing, by the processing unit (202), a handling logic to control the one or more field devices (126A-B) in an event when the error state is determined in the first programable logic controller (108A).

8. An industrial control system (102) for managing a technical installation during occurrence of an error state in a controller device (108A), wherein the industrial control system (102) comprises:
a processing unit (202); and
a memory (204) coupled to the processing unit (202), wherein the memory comprises a Plant safety administrator module (112) stored in the form of machine-readable instructions executable by the processing unit (202), wherein the plant safety administrator module (112) is capable of causing the processing unit (202) to perform a method according to any of the claims 1-7.

9. An industrial environment (100) comprising:
an industrial control system (102) as claimed in claim 8;
the technical installation (106) comprising one or more physical components; and
a plurality of human machine interfaces (120A-N) communicatively coupled to the industrial control system (102) via a network (104).

10. A computer-program product, having machine-readable instructions stored therein, that when executed by one or more processors, , cause the processors to perform a method according to any of the claims 1-7.

## Patentansprüche

1. Verfahren zur Verwaltung einer technischen Anlage (106) beim Auftreten eines Fehlerzustands in einem Steuergerät (108A) der technischen Anlage (106), wobei die technische Anlage eine oder mehrere Feldvorrichtungen (126A-B) umfasst, die durch ein erstes Steuergerät (108A) einer Mehrzahl von Steuergeräten (108A-N) gesteuert werden, und wobei das Verfahren umfasst:
Empfangen, durch eine Verarbeitungseinheit (202), einer Mehrzahl von Programmausführungsparametern von jedem Steuergerät der Mehrzahl von Steuergeräten (108A-N) in der technischen Anlage (106), wobei die Mehrzahl von Programmausführungsparametern, die jedem Steuergerät zugeordnet sind, Laufzeitinformationen eines entsprechenden Steuergeräts während einer Programmausführung eines Engineering-Programms in dem entsprechenden Steuergerät umfasst;
Bestimmen, durch die Verarbeitungseinheit (202), eines Fehlerzustands in dem ersten Steuergerät (108A) der Mehrzahl von Steuergeräten (108A-N), wobei der Fehlerzustand basierend auf einer Analyse der empfangenen Mehrzahl von Programmausführungsparametern bestimmt wird;
Bestimmen, durch die Verarbeitungseinheit (202), aus einer Mehrzahl von Ausfallsicherheitslogiken einer dem ersten Steuergerät (108A) zugeordneten Ausfallsicherheitslogik basierend auf der Bestimmung des Fehlerzustands in dem ersten Steuergerät (108A); und
Initiieren, durch die Verarbeitungseinheit (202), einer Ausführung der dem ersten Steuergerät (108A) zugeordneten Ausfallsicherheitslogik in einem zweiten Steuergerät (108B) der Mehrzahl von Steuergeräten (108-N), wobei das Initiieren der Ausführung der Ausfallsicherheitslogik umfasst:
Bestimmen, durch die Verarbeitungseinheit (202), dass das zweite Steuergerät (108B) basierend auf einer Analyse der empfangenen Programmausführungsparameter keinen Fehlerzustand aufweist;
Übertragen, durch die Verarbeitungseinheit (202), der Ausfallsicherheitslogik an das zweite Steuergerät (108B) basierend auf der Bestimmung, dass das zweite Steuergerät sich nicht in dem Fehlerzustand befindet; und
Herstellen, durch die Verarbeitungseinheit (202), einer Verbindung zwischen dem zweiten Steuergerät (108B) und dem einen oder den mehreren Feldvorrichtungen (126A-B), die dem ersten Steuergerät (108A) zugeordnet sind.

2. Verfahren nach Anspruch 1, ferner umfassend Anhalten, durch die Verarbeitungseinheit (202), einer Ausführung eines Engineering-Programms in dem ersten Steuergerät (108A) basierend auf der Bestimmung des Fehlerzustands des ersten Steuergeräts (108A).

3. Verfahren nach Anspruch 2, ferner umfassend Anhalten, durch die Verarbeitungseinheit (202), einer Ausführung des ersten Steuergeräts (108A) basierend auf der Bestimmung des Fehlerzustands des ersten Steuergeräts (108A).

4. Verfahren nach Anspruch 3, ferner umfassend:
Anhalten, durch die Verarbeitungseinheit (202), der einen oder der mehreren Feldvorrichtungen (126A-B) basierend auf der Bestimmung des Fehlerzustands in dem ersten Steuergerät (108A); Bestimmen, durch die Verarbeitungseinheit (202), dass der Fehlerzustand des ersten Steuergeräts (108A) behoben ist, wobei eine Behebung des Fehlerzustands basierend auf einer Analyse der empfangenen Mehrzahl von Programmausführungsparametern bestimmt wird; und
Fortsetzen, durch die Verarbeitungseinheit (202), der Laufzeit des ersten Steuergeräts (108A) basierend auf der Bestimmung, dass der Fehlerzustand des ersten Steuergeräts (108A) behoben ist.

5. Verfahren nach Anspruch 1 bis 4, ferner umfassend:
Bestimmen, durch die Verarbeitungseinheit (202), einer Anzahl von Zeiten, in denen der Fehlerzustand in dem ersten Steuergerät (108A) während eines Zeitintervalls bestimmt wird; und
Benachrichtigen, durch die Verarbeitungseinheit (202), eines Benutzers über die bestimmte Anzahl von Zeiten.

6. Verfahren nach Anspruch 1 bis 5, ferner umfassend:
Bestimmen, durch die Verarbeitungseinheit (202), eines Programmierblocks eines Engineering-Programms, das durch das erste Steuergerät (108A) ausgeführt wird, basierend auf der Analyse der Programmausführungsparameter;
Bestimmen, durch die Verarbeitungseinheit (202), ob der Fehlerzustand in dem ersten Steuergerät (108A) während einer Ausführung des bestimmten Programmierblocks bestimmt wird; und Benachrichtigen, durch die Verarbeitungseinheit (202), eines Benutzers, dass der Fehlerzustand in dem ersten Steuergerät (108A) während der Ausführung des bestimmten Programmierblocks durch das erste Steuergerät (108A) bestimmt wird.

7. Verfahren nach Anspruch 1 bis 6, ferner umfassend:
Ausführen, durch die Verarbeitungseinheit (202), einer Handhabungslogik zum Steuern der einen oder mehreren Feldvorrichtungen (126A-B) in einem Fall, in dem der Fehlerzustand in dem ersten programmierbaren Logiksteuergerät (108A) bestimmt wird.

8. Industrielles Steuersystem (102) zum Verwalten einer technischen Anlage beim Auftreten eines Fehlerzustands in einem Steuergerät (108A), wobei das industrielle Steuersystem (102) umfasst:
eine Verarbeitungseinheit (202); und
einen Speicher (204), der mit der Verarbeitungseinheit (202) gekoppelt ist, wobei der Speicher ein Anlagen-Sicherheitsverwaltungsmodul (112) umfasst, das in Form von maschinenlesbaren Anweisungen gespeichert ist, die durch die Verarbeitungseinheit (202) ausführbar sind, wobei das Anlagen-Sicherheitsverwaltungsmodul (112) ausgelegt ist, die Verarbeitungseinheit (202) zu veranlassen, ein Verfahren nach einem der Ansprüche 1-7 durchzuführen.

9. Industrieumgebung (100), umfassend:
ein Industriesteuersystem (102) nach Anspruch 8;
die technische Anlage (106), die eine oder mehrere physische Komponenten umfasst; und
eine Mehrzahl von Mensch-Maschine-Schnittstellen (120A-N), die über ein Netzwerk (104) kommunikativ mit dem Industriesteuersystem (102) gekoppelt sind.

10. Computerprogrammprodukt, in dem maschinenlesbare Anweisungen gespeichert sind, die, wenn sie durch eine oder mehrere Prozessoren ausgeführt werden, die Prozessoren veranlassen, ein Verfahren nach einem der Ansprüche 1-7 durchzuführen.

## Revendications

1. L'invention concerne un procédé pour gérer une installation technique (106) lors de l'apparition d'un état d'erreur dans un dispositif contrôleur (108A) de l'installation technique (106), l'installation technique comprenant un ou plusieurs dispositifs de terrain (126A-B) commandés par un premier dispositif contrôleur (108A) d'une pluralité de dispositifs contrôleurs (108A-N), et le procédé comprenant les étapes consistant à :
recevoir, par une unité de traitement (202), une pluralité de paramètres d'exécution de programme provenant de chaque dispositif contrôleur de la pluralité de dispositifs contrôleurs (108A-N) de l'installation technique (106), la pluralité de paramètres d'exécution de programme, associée à chaque dispositif contrôleur, comprenant une information d'exécution d'un dispositif contrôleur correspondant pendant une exécution d'un programme d'ingénierie dans le dispositif contrôleur correspondant ;
déterminer, par l'unité de traitement (202), un état d'erreur dans le premier dispositif contrôleur (108A) de la pluralité de dispositifs contrôleurs (108A-N), l'état d'erreur étant déterminé sur la base d'une analyse de la pluralité de paramètres d'exécution de programme reçue ;
déterminer, à partir d'une pluralité de logiques d'intégration de sécurité, par l'unité de traitement (202), une logique d'intégration de sécurité associée au premier dispositif contrôleur (108A) sur la base de la détermination de l'état d'erreur dans le premier dispositif contrôleur (108A) ; et
lancer, par l'unité de traitement (202), une exécution de la logique d'intégration de sécurité associée au premier dispositif contrôleur (108A), dans un deuxième dispositif contrôleur (108B) de la pluralité de dispositifs contrôleurs (108-N), le lancement de l'exécution de la logique d'intégration de sécurité comprenant les étapes consistant à :
déterminer, par l'unité de traitement (202), que le deuxième dispositif contrôleur (108B) n'est pas dans un état d'erreur sur la base de l'analyse des paramètres d'exécution de programme reçus ;
transmettre, par l'unité de traitement (202), la logique d'intégration de sécurité au deuxième dispositif contrôleur (108B) lorsqu'il est déterminé que le deuxième dispositif contrôleur n'est pas dans l'état d'erreur ; et
établir, par l'unité de traitement (202), une connexion entre le deuxième dispositif contrôleur (108B) et les un ou plusieurs dispositifs de terrain (126A-B) associés au premier dispositif contrôleur (108A).

2. Procédé selon la revendication 1, comprenant en outre l'arrêt, par l'unité de traitement (202), d'une exécution d'un programme d'ingénierie dans le premier dispositif contrôleur (108A) sur la base de la détermination de l'état d'erreur du premier dispositif contrôleur (108A).

3. Procédé selon la revendication 2, comprenant en outre l'arrêt, par l'unité de traitement (202), d'une exécution du premier dispositif contrôleur (108A) sur la base de la détermination de l'état d'erreur du premier dispositif contrôleur (108A).

4. Procédé selon la revendication 3, comprenant en outre les étapes consistant à :
arrêter, par l'unité de traitement (202), les un ou plusieurs dispositifs de terrain (126A-B) sur la base de la détermination de l'état d'erreur dans le premier dispositif contrôleur (108A) ;
déterminer, par l'unité de traitement (202), que l'état d'erreur du premier dispositif contrôleur (108A) est résolu, une résolution de l'état d'erreur étant déterminée sur la base d'une analyse de la pluralité de paramètres d'exécution de programme reçue ; et
reprendre, par l'unité de traitement (202), l'exécution du premier dispositif contrôleur (108A) lorsqu'il est déterminé que l'état d'erreur du premier dispositif contrôleur (108A) est résolu.

5. Procédé selon les revendications 1 à 4, comprenant en outre les étapes consistant à :
déterminer, par l'unité de traitement (202), un nombre de fois où l'état d'erreur a été déterminé dans le premier dispositif contrôleur (108A) pendant un intervalle de temps ; et
informer, par l'unité de traitement (202), un utilisateur du nombre de fois déterminé.

6. Procédé selon les revendications 1 à 5, comprenant en outre les étapes consistant à :
déterminer, par l'unité de traitement (202), un bloc de programmation d'un programme d'ingénierie exécuté par le premier dispositif contrôleur (108A) sur la base de l'analyse des paramètres d'exécution de programme ;
déterminer, par l'unité de traitement (202), si l'état d'erreur est déterminé dans le premier dispositif contrôleur (108A) lors d'une exécution du bloc de programmation déterminé ; et
informer, par l'unité de traitement (202), un utilisateur que l'état d'erreur a été déterminé dans le premier dispositif contrôleur (108A) lors de l'exécution du bloc de programmation déterminé par le premier dispositif contrôleur (108A).

7. Procédé selon les revendications 1 à 6, comprenant en outre les étapes consistant à :
exécuter, par l'unité de traitement (202), une logique de gestion pour commander les un ou plusieurs dispositifs de terrain (126A-B) dans le cas où l'état d'erreur est déterminé dans le premier contrôleur logique programmable (108A).

8. Système de commande industriel (102) servant à gérer une installation technique lors de l'apparition d'un état d'erreur dans un dispositif contrôleur (108A), le système de commande industriel (102) comprenant :
une unité de traitement (202) ; et
une mémoire (204) couplée à l'unité de traitement (202), la mémoire comprenant un module d'administration de sécurité de site (112) stocké sous la forme d'instructions lisibles par machine exécutables par l'unité de traitement (202), le module d'administration de sécurité de site (112) étant capable d'amener l'unité de traitement (202) à réaliser un procédé selon l'une quelconque des revendications 1 à 7.

9. Environnement industriel (100) comprenant :
un système de commande industriel (102) selon la revendication 8 ;
l'installation technique (106) comprenant un ou plusieurs composants physiques ; et
une pluralité d'interfaces homme-machine (120A-N) couplées au système de commande industriel (102) par des communications via un réseau (104).

10. Produit programme informatique, dans lequel sont stockées des instructions lisibles par machine qui, lorsqu'elles sont exécutées par un ou plusieurs processeurs, amènent les processeurs à réaliser un procédé selon l'une quelconque des revendications 1 à 7.
